Europäisches Patentamt

European Patent Office

Office européen des brevets

(19)

(11) Veröffentlichungsnummer: **0 005 521**

**A1**

(12)    **EUROPÄISCHE PATENTANMELDUNG**

(21) Anmeldenummer: **79101450.9**

(22) Anmeldetag: **11.05.79**

(51) Int. Cl.²: **A 62 B 35/02**

(30) Priorität: **17.05.78 DE 2821491**

(43) Veröffentlichungstag der Anmeldung:
**28.11.79 Patentblatt 79/24**

(84) Benannte Vertragsstaaten:
**FR GB IT SE**

(71) Anmelder: **Hugo Kern + Liebers & Co. Platinen- und Federnfabrik**
**Sebastian-Kneipp-Strasse 14**
**D-7230 Schramberg 11(DE)**

(72) Erfinder: **Otzen, Uwe, Dr. Dipl.Ing.**
**Eisenbahnstrasse 16**
**D-7210 Rottweil(DE)**

(72) Erfinder: **Grüner, Peter**
**Schillerstrasse 45**
**D-7230 Schramberg 1(DE)**

(74) Vertreter: **Westphal, Klaus, Dipl.-Ing. et al,**
**Sebastian-Kneipp-Strasse 14**
**D-7730 VS-Villingen(DE)**

(54) Vorrichtung zum automatischen Aufrollen von Sicherheitsgurten.

(57) Bei einer Vorrichtung zum automatischen Aufrollen von Sicherheitsgurten ist eine Reibungsbremse vorgesehen, die bei angelegtem Gurt die Gurtrückzugskraft verringert und für den Einzug des abgelegten Gurtes freigegeben wird. Die Reibungsbremse besteht aus einem mit der Gurtwelle verbundenen Reibungselement (20), das mit einem zweiten Reibungselement (22) ständig in Eingriff steht. Das zweite Reibungselement (22) kann frei drehbar mitgenommen oder mittels eines Rasthebels (46) festgehalten werden. Erfindungsgemäß ist der Rasthebel (46) ein Arm eines zweiarmigen Kipphebels (32), der durch Nasen (24) am Umfang des zweiten Reibungselements (22) zwangsläufig so gesteuert wird, daß der Rasthebel (46) das zweite Reibungselement (22) während des Gurtauszuges freigibt, am Ende jedes Gurtauszuges automatisch festhält und bei einem kurzen Gurtauszug wieder für den Gurteinzug freigibt.

FIG.1

EP 0 005 521 A1

Dipl. Ing. Klaus Westphal

Dr. rer. nat. Bernd Mussgnug

Dr. rer. nat. Otto Buchner

PATENTANWÄLTE

Seb.-Kneipp-Strasse 14

D-7730 VS-VILLINGEN

Flossmannstrasse 30 a

D-8000 MÜNCHEN 60

Telefon 07721-65343
Telegr. Westbuch Villir
Telex 5213177 webu

Telefon 089-832446
Telegr. Westbuch Mün
Telex 5213177 webu

0005521

-1-   605.60 EP

Hugo Kern & Liebers & Co.
Platinen- und Federnfabrik
7230 Schramberg 11

**Vorrichtung zum automatischen Aufrollen von Sicherheitsgurten**

Die Erfindung betrifft eine Vorrichtung zum automatischen Aufrollen von Sicherheitsgurten mit einer in einem Gehäuse drehbaren Gurtwelle, an welcher eine beim Ausziehen des Gurtes spannbare Aufrollfeder angreift, und mit einer die Gurtrückzugskraft entlastenden Reibungsbremse, die ein erstes mit der Gurtwelle verbundenes Reibungselement und ein mit diesem ständig in Reibeingriff stehendes, frei drehbares zweites Reibungselement aufweist, das mittels eines Rasthebels drehfest am Gehäuse festlegbar ist.

Automatische Sicherheitsgurte, wie sie insbesondere in Kraftfahrzeugen, aber auch in sonstigen Luft-, Land- und Wasserfahrzeugen verwendet werden, sollen zwei Eigenschaften erfüllen. Einerseits soll der abgelegte Gurt zuverlässig vollständig aufgerollt werden, wozu eine hohe Gurtrückzugskraft der Aufrollfeder erwünscht ist. Andererseits soll der angelegte Gurt einen möglichst geringen Druck auf den Benutzer ausüben, wozu eine geringe Gurtrückzugskraft erwünscht ist.

Postscheckkonto: Karlsruhe 76975-754   Bankkonto: Deutsche Bank AG Villingen (BLZ 69470039) 146332

Um diese einander widersprechenden Forderungen zu erfüllen, ist es bekannt, eine Reibungsbremse vorzusehen, die bei angelegtem Gurt auf die Gurtwelle einwirkt und die Gurtrückzugskraft der Aufrollfeder weitgehend entlastet. Bei angelegtem Gurt wirkt daher nur eine schwache restliche Rückzugskraft auf den Benutzer. Für den Gurteinzug gibt die Reibungsbremse die Gurtwelle frei, so daß der Gurt mit der vollen Kraft der Rückzugsfeder aufgerollt werden kann.

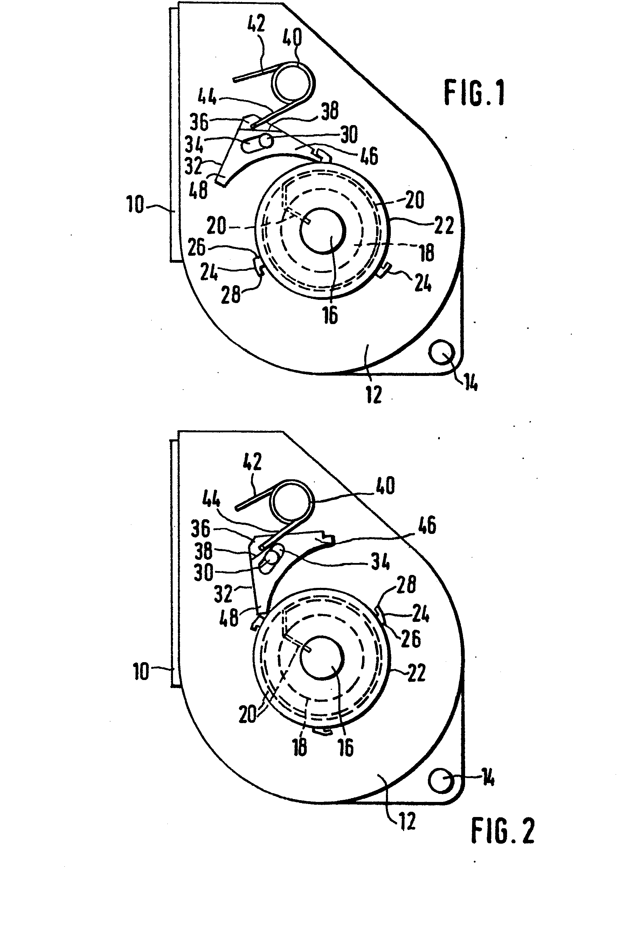

Bei einer Vorrichtung der eingangs genannten Gattung, wie sie aus der DE-OS 22 56 493, Ausführungsbeispiel der Fig. 1, bekannt ist, besteht die Reibungsbremse aus einer stirnseitigen Reibfläche der Gurtwelle und einer mit dieser unter Federdruck in Reibeingriff stehenden frei drehbaren Reibscheibe. Ein am Gehäuse angebrachter, durch einen Elektromagneten verschwenkbarer Rasthebel kann in diese Reibscheibe eingreifen und sie dadurch drehfest in Bezug auf das Gehäuse festhalten. Bei eingerastetem Hebel wird somit die Reibungsbremse wirksam und ihr Bremsmoment wirkt dem den Gurt einziehenden Moment der an der Gurtwelle angreifenden Aufrollfeder entgegen. Gibt der Rasthebel die Reibscheibe frei, so kann sich diese frei mit der Gurtwelle drehen und das Rückzugsmoment der Aufrollfeder wird voll wirksam.

Diese bekannte Vorrichtung weist wegen des für die Betätigung des Rasthebels notwendigen Elektromagneten große Einbauabmessungen auf und ist in der Herstellung teuer. Weiter erfordert der Elektromagnet einen zusätzlichen Aufwand an elektrischer Installation. Schließlich ist für die Betätigung des Elektromagneten eine elektrische Kontaktgabe notwendig. Eine solche Kontaktgabe von Hand würde die Benutzung des Gurtes umständlich und lästig machen. Eine automatische Kontaktgabe beispielsweise beim Schließen des Gurtschlosses hätte zur Folge, daß die Reibungsbremse bei angelegtem Gurt ständig
wirksam ist, so daß ihr Bremsmoment auch beim Gurtauszug
durch den Benutzer überwunden werden muß, wenn sich dieser
bei angelegtem Gurt vorbeugt.

Aus der DE-OS 22 56 493, Ausführungsbeispiel der Fig. 2 und
3, und aus der DE-OS 25 26 630 sind Gurtaufrollvorrichtungen
mit einer die Gurtrückzugskraft entlastenden Reibungsbremse
bekannt, die wirksam wird, sobald der Gurt um eine vorgegebene Länge ausgezogen ist. Die Steuerung der Reibungsbremse
erfolgt durch einen Hebel, der den Außenumfang des Gurtwickels auf der Gurtwelle abtastet. Bei Vorrichtungen dieser
Art ist das Wirksamwerden der Reibungsbremse nur von der
Gurtauszugslänge abhängig. Eine Anpassung an unterschiedliche
Sitzpositionen und unterschiedlichen Körperumfang der Benutzer ist nicht möglich. Die Reibungsbremse ist weiter ab
der vorgegebenen Auszugslänge ständig wirksam, so daß der
Benutzer auch bei einem Vorbeugen mit angelegtem Gurt diesen
gegen die Kraft der Reibungsbremse ausziehen muß. Um diesen
Nachteil zu vermeiden, ist bei der bekannten Vorrichtung ein
Freilauf vorgesehen, der die Reibungsbremse nur beim Gurteinzug, nicht aber beim Gurtauszug wirksam werden läßt. Ein solcher Freilauf bedeutet einen zusätzlichen konstruktiven Aufwand und eine Verteuerung. Schließlich liegt beim vollständigen Einzug des Gurtes mit freigegebener Reibungsbremse der
den Gurtwickeldurchmesser abtastende Hebel unter Federspannung
am Umfang des Gurtwickels an und bremst den Gurteinzug. Diese
Bremswirkung beim für ein zuverlässiges Aufrollen entscheidenden letzten Abschnitt der Einzugsbewegung ist erheblich, da
die Kraft dieser Feder auch den Schließdruck der Reibungsbremse
erzeugt.

— 4 —

Der Kipphebel steuert die Vorrichtung automatisch in der
Weise, daß die Reibungsbremse immer dann außer Betrieb gesetzt wird, wenn der Gurt ausgezogen wird. Sowohl das Ausziehen des Gurtes beim Anlegen als auch das Ausziehen des
angelegten Gurtes bei einem Vorbeugen des Benutzers wird daher durch die Reibungsbremse nicht behindert. Sobald der
Gurtauszugsvorgang beendet ist und der Gurt durch die Aufrollfeder eingezogen wird, wird die Reibungsbremse durch den
Kipphebel gesteuert wirksam. Die die Gurtrückzugskraft entlastenden Wirkung der Reibungsbremse tritt somit unabhängig
von der Auszugslänge und damit der Sitzposition und dem
Körperumfang des Benutzers ein und ebenso unabhängig davon,
ob der Gurtauszug aufgrund des Anlegens des Gurtes oder aufgrund eines Vorbeugens des Benutzers erfolgte. Für den Einzug des abgelegten Gurtes ist es nur erforderlich, den Gurt
um eine minimale Länge auszuziehen, um die Reibungsbremse außer
Betrieb zu setzen, so daß der Gurteinzug völlig unbehindert
mit dem vollen Drehmoment der Aufrollfeder erfolgt. Diese den
tatsächlichen Bedürfnissen optimal angepaßte Wirkungsweise
der Vorrichtung ergibt sich völlig automatisch durch die
Steuerung mittels des Kipphebels.

Die Vorrichtung ist äußerst einfach aufgebaut und besteht vorzugsweise nur aus dem Kipphebel, der auf der Welle frei drehbaren Trommel, die das zweite Reibungselement bildet, der
innen an der Trommel anliegenden an der Gurtwelle befestigten
Rutschfeder und der den Kipphebel beaufschlagenden Schenkelfeder. Der Kipphebel und die Trommel sind einfache und billige
Kunststoffspritzteile und ebenso sind die Rutschfeder und die
Schenkelfeder einfache und billige Teile. Die Herstellung und
Montage der Vorrichtung ist daher sehr billig, so daß die
Vorrichtung den Gesamtpreis des automatischen Sicherheitsgurtes praktisch nicht beeinflußt.

— 5 —

Die gesamte Vorrichtung verlängert die Einbauabmessungen
des gesamten Gurtaufrollers in axialer Richtung der Gurtwelle nur um wenige Millimeter. Dies ist insbesondere für
den Einbau in Personenkraftwagen von wesentlicher Bedeutung.

Da die aus Trommel und Rutschfeder bestehende Reibungsbremse ständig in Eingriff steht, entfällt ein aufwendiger
und störanfälliger Mechanismus für die Steuerung der
Bremse. Außerdem kann das erforderliche Bremsmoment genau eingestellt werden und bleibt über die gesamt Lebensdauer der Vorrichtung unverändert. Die geringe Anzahl von
Einzelteilen und ihr einfacher Aufbau gewährleisten eine
hohe Funktionssicherheit der Vorrichtung. Der Verschleiß und
die mechanische Beanspruchung der Einzelteile ist so gering,
daß eine hohe Lebensdauer erreicht wird, die allen Anforderungen
ohne weiteres genügt.

- 6 -

Im folgenden wird die Erfindung anhand eines in der Zeichnung
dargestellten Ausführungsbeispiels näher erläutert. Es zeigen:

Fig. 1 und 2    - eine Draufsicht auf eine Vorrichtung gem.
                  der Erfindung in zwei verschiedenen Betriebsstellungen.

In der Zeichnung ist eine Seitenansicht einer automatischen
Aufrollvorrichtung für Sicherheitsgurte dargestellt. Die
Vorrichtung weist ein Gehäuse auf, das aus einer Befestigungsgrundplatte 1o und zu dieser senkrechten Seitenwänden 12 besteht. Der Grundplatte 1o gegenüber sind die Seitenwände 12
durch eine Stange 14 miteinander verbunden. In den Seitenwänden 12 ist drehbar eine Gurtwelle 16 gelagert. Auf der
Gurtwelle 16 ist zwischen den Seitenwänden der Gurt befestigt.
Eine in der Zeichnung nicht sichtbare Aufrollfeder wird beim
Abziehen des Gurtes von der Gurtwelle 16 gespannt und treibt
die Gurtwelle zum Aufrollen des freigegebenen Gurtes an.

Weiter ist eine ebenfalls in der Zeichnung nicht sichtbare
Blockiereinrichtung vorgesehen, die bei einem ruckartigen
Ausziehen des Gurtes die Gurtwelle blockiert. Alle diese Einzelheiten sind herkömmlich ausgebildet, so daß ihre
Beschreibung und ihre Darstellung in der Zeichnung nicht
erforderlich ist.

Die Gurtwelle 16 ragt mit einem Stummel über die in der
Zeichnung sichtbare Seitenwand 12 hinaus. In diesem hinausragenden Stummel ist gegebenenfalls in einem Bund 18 eine
Rutschfeder 2o befestigt. Die radial in den Bund 18 des
Wellenstummels 16 eingesetzte Rutschfeder 2o weist annähernd eine spiralig verlaufende Windung auf und liegt
unter Druck an der inneren Umfangsfläche einer Trommel
22 an.

Die Trommel 22 ist ein Kunststoffspritzteil in Form
eines flachen Hohlzylinders. Die eine der Seitenwand zugewandte axiale Bodenfläche der Trommel 22 ist offen, während
die äußere axiale Bodenfläche geschlossen ist und als
Nabe konzentrisch, frei drehbar auf dem äußeren über den
Bund 18 hinausragenden Ende des Stummels der Gurtwelle
16 sitzt. Die Trommel 22 umschließt somit die Rutschfeder
2o und deckt sie gleichzeitig axial nach außen ab. Auf
der Gurtwelle 16 ist die Trommel 22 beispielsweise durch
einen nicht gezeigten Sicherungsring axial gehalten.

Am Aussenumfang der Trommel 22 sind in gleichem gegenseitigem
Winkelabstand 3 Nasen 24 vorgesehen. Die Nasen 24 weisen
eine flach ansteigende Flanke auf, die in der Darstellung
der Zeichnung in Richtung des Uhrzeigersinnes weist.

In dieser flach ansteigenden Flanke ist ein radial verlaufender Absatz 26 vorgesehen. Die in Richtung des
Gegenuhrzeigersinnes weisende Flanke der Nasen 24
ist mit einem in Umfangsrichtung überstehenden Vorsprung
28 ausgebildet.

Seitlich von der Trommel 22 ist in der Seitenwand 12
ein Schwenkzapfen 3o angebracht. Auf diesem Schwenkzapfen 3o sitzt durch einen nicht dargestellten Sicherungsring gehalten ein zweiarmiger Kipphebel 32. Die beiden
Arme des Kipphebels 32 verlaufen unter einem stumpfen,
sich gegen die Trommel 22 öffnenden Winkel zueinander.
Im Scheitelbereich des Kipphebels 32 ist ein in Längsrichtung des Kipphebels verlaufendes Langloch 34 vorgesehen, das von dem Schwenkzapfen 3o durchsetzt wird,
so daß der Kipphebel 32 um diesen Zapfen 3o schwenkbar und in Richtung des Langloches 34 verschiebbar ist.

Im Scheitelbereich des dreieckigen Kipphebels 32 ist
ausserhalb des Langloches 34 eine stufenförmige Ausnehmung 36 vorgesehen. Durch diese Ausnehmung 36 wird
eine Anlagefläche 38 gebildet, die senkrecht zur Schwenkebene des Kipphebels 32 angeordnet und gegen die Senkrechte zu dessen Winkelhalbierender leicht geneigt ist,
wie dies in der Zeichnung zu erkennen ist.

Eine Schenkelfeder 4o ist mit ihrem einen Schenkel 42
an der Seitenwand 12 befestigt und liegt mit ihrem anderen freien Schenkel 44 unter Druck an der Anlagefläche
38 des Kipphebels 32 an. Der Schenkel 44 wird in der Ausnehmung 36 durch den auf dem Schwenkzapfen 3o sitzenden,
die Ausnehmung 36 überragenden Sicherungsring gehalten.

Der in der Darstellung der Zeichnung rechte Arm 46 des
zweiarmigen Kipphebels 32 ist als Rasthebel ausgebildet,
der unter den Vorsprung 28 der Nasen 24 eingreifen kann,
wie in Fig. 1 dargestellt ist. In dieser Stellung wird
der Rasthebel 46 durch den Vorsprung 28 daran gehindert,
radial vom Umfang der Trommel 22 abzuschwenken. Der
zweite Arm 48 des Kipphebels 32 ist an seinem vorderen
Ende abgeflacht, so daß er mit dem Absatz 26 der Nasen
24 in Eingriff kommen kann, wenn er am Umfang der Trommel
22 anliegt, wie dies in Fig. 2 dargestellt ist.

Im folgenden wird die Funktionsweise der Vorrichtung erläutert:

Befindet sich der Kipphebel 32 in seiner nach links verschobenen Stellung, so daß sich der Schwenkzapfen 3o am
rechten Ende des Langloches 34 befindet, so drückt der
Schenkel 44 der Schenkelfeder 4o links vom Schwenkzapfen
3o gegen die Anlagefläche 38, wie Fig. 1 zeigt.

Durch die Schenkelfeder 40 wird somit der zweite Arm 48
des Kipphebels 32 gegen den Umfang der Trommel 22 gedrückt.

Befindet sich der Kipphebel 32 in seiner nach rechts verschobenen Stellung, so drückt der Schenkel 44 der Schenkelfeder 40 rechts vom Schwenkzapfen 30 gegen den Kipphebel,
wie in Fig. 2 dargestellt ist. In dieser Stellung wird
durch die Schenkelfeder 40 der als Rasthebel 46 ausgebildete rechte Arm gegen den Umfang der Trommel 22 gedrückt.

Wird der auf die Gurtwelle 16 aufgerollte Gurt ausgezogen,
so dreht sich die Gurtwelle 16 in der Darstellung der
Zeichnung im Uhrzeigersinn. Die nicht dargestellte an
der Gurtwelle angreifende Aufrollfeder wird dabei gespannt. Bei dieser Drehung der Gurtwelle 16 nimmt die
unter Reibungskraft an der Trommel 22 anliegende Rutschfeder 20 die Trommel 22 im Uhrzeigersinn mit.

Befindet sich dabei der Kipphebel 32 in einer solchen
Stellung, daß der rechte Arm 46 am Umfang der Trommel
22 anliegt, so behindert der Kipphebel 32 die Drehung
der Trommel 22 nicht, da der Arm 46 über die flach
ansteigende Flanke der Nasen 24 hinweggleiten kann.
Befindet sich der Kipphebel dagegen in der Stellung,
in welcher der zweite Arm 48 durch die Schenkelfeder 40

gegen den Umfang der Trommel 22 gedrückt wird, so kommt
bei der Drehung der Trommel 22 die nächste Nase 24 mit
ihrem Absatz 26 in Eingriff mit dem abgestumpften Ende
des Armes 48 und schiebt den Kipphebel 32 nach rechts
in die in Fig. 2 gezeigte Stellung. Nun drückt die Rastfeder 4o rechts vom Schwenkzapfen 3o gegen die Anlagefläche 38. Der Kipphebel 32 kippt somit um und liegt mit
dem rechten Arm 46 am Umfang der Trommel 22 an. Die
Trommel 22 kann damit beim weiteren Gurtauszug unbehindert
im Uhrzeigersinn mitgenommen werden.

Ist der Gurt auf diese Weise vollständig ausgezogen und
vom Benutzer angelegt, so dreht die gespannte Aufrollfeder die Gurtwelle im Gegenuhrzeigersinn, d.h. in Gurteinzugsrichtung. Dabei wird durch die Rutschfeder 2o zunächst die Trommel 22 im Gegenuhrzeigersinn mitgenommen,
bis die nächste Nase 24 mit dem am Umfang der Trommel
22 anliegenden rechten Arm 46 des Kipphebels 32 in Berührung kommt.

Die Nase 24 schiebt dann den Kipphebel 32 nach links in
die in Fig. 1 gezeigte Stellung. In dieser Stellung drückt
die Schenkelfeder 4o zwar links von dem Schwenkzapfen 3o
gegen die Anlagefläche 38, der Kipphebel 32 kann jedoch
nicht geschwenkt werden, da der Vorsprung 28 der Nase
das radiale Abschwenken des eingerasteten Hebelarmes 46
verhindert.

- 12 -

In dieser in Fig. 1 gezeigten Betriebsstellung bei angelegtem Gurt wird somit die Gurtwelle 16 von der Aufrollfeder im Gegenuhrzeigersinn gedreht, um den Gurt aufzurollen. Da aber die Trommel 22 durch den Rasthebel 46
festgehalten wird, kann die sich mit der Gurtwelle 16
drehende Rutschfeder 2o die Trommel 22 nicht mitnehmen
sondern gleitet unter Reibung am Innenumfang der Trommel
22.

Das durch diese Reibungskraft erzeugte auf die Gurtwelle
16 einwirkende Bremsmoment kompensiert weitgehend das
an der Gurtwelle 16 angreifende Drehmoment der Aufrollfeder, so daß der Gurt nur noch mit dem verbleibenden
geringen Restmoment eingezogen wird. Auf den Benutzer
wirkt daher nur noch eine sehr geringe Gurtrückzugskraft, die nicht als lästig empfunden wird.

Wird der Gurt abgelegt, so genügt ein geringfügiges Ausziehen des Gurtes, um die Gurtwelle 16 im Uhrzeigersinn
zu drehen. Dabei wird durch die Rutschfeder 2o die Trommel
22 ebenfalls im Uhrzeigersinn mitgenommen. Der Rasthebel
46 kommt dadurch von dem Vorsprung 28 der Nase 24 frei
und der Kipphebel 32 kann unter der Wirkung der Schenkelfeder 4o umkippen, so daß er mit dem linken Arm 48 unter
dem Druck der Schenkelfeder 4o am Umfang der Trommel 22
anliegt. Die Aufrollfeder kann nun die Gurtwelle 16 im

- *13* -

Gegenuhrzeigersinn drehen, um den Gurt aufzurollen. Dabei
wird die Trommel 22 durch die Rutschfeder 2o im Gegenuhrzeigersinn mitgenommen. Der linke Arm 48, der am Umfang
der Trommel 22 anliegt, behindert die Drehung der Trommel
22 nicht, da er über die Nasen 24 hinweggleitet. Das Aufrollen des Gurtes erfolgt daher mit dem vollen Drehmoment
der Aufrollfeder.

Wird bei angelegtem Gurt durch eine Bewegung des Benutzers
der Gurt geringfügig ausgezogen, so daß der Rasthebel 46
von dem Vorsprung 28 der Nase 24 freikommt, so kippt der
Kipphebel 32 ebenfalls in die Stellung um, in welche er
mit dem linken Arm 48 am Umfang der Trommel 22 anliegt
und die Bremswirkung freigibt. Dies beeinträchtigt die
Funktionsweise der Vorrichtung jedoch nicht, da bereits
eine sehr geringe Auszuglänge des Gurtes ausreicht, um
die nächste Nase 24 mit dem linken Arm 48 des Kipphebels
32 in Eingriff zu bringen und den Kipphebel wieder nach
rechts in die in Fig. 2 gezeigte Stellung zu verschieben,
so daß er wieder in die die Trommel 22 arretierende
Stellung kippt und die Bremswirkung wieder einsetzt.

Dipl. Ing. Klaus Westphal
Dr. rer. nat. Bernd Mussgnug

Dr. rer. nat. Otto Buchner

PATENTANWÄLTE

Seb.-Kneipp-Strasse 14

D-7730 VS-VILLINGEN

Flossmannstrasse 30 a

D-8000 MÜNCHEN 60

Telefon 07721 - 55343
Telegr. Westbuch Vi
Telex 5213177 wba

Telefon 089 - 832445
Telegr. Westbuch Mü
Telex 5213177 wba

0005521

u. Z. 605.60 EP

## Patentansprüche

1. Vorrichtung zum automatischen Aufrollen von Sicherheitsgurten mit einer in einem Gehäuse drehbaren Gurtwelle,
an welcher eine beim Ausziehen des Gurtes spannbare Aufrollfeder angreift, und mit einer die Gurtrückzugskraft
entlastenden Reibungsbremse, die ein erstes mit der Gurtwelle verbundenes Reibungselement und ein mit diesem
ständig in Reibeingriff stehendes, frei drehbares zweites
Reibungselement aufweist, das mittels eines Rasthebels
drehfest am Gehäuse festlegbar ist, dadurch gekennzeichnet, daß der Rasthebel (46) ein Arm eines zweiarmigen
Kipphebels (32) ist, der mit einem Langloch (34) verschiebbar auf einem gehäusefesten Schwenkzapfen (30) sitzt,
daß eine Feder (40) in der Weise an dem Kipphebel angreift, daß ihr Angriffspunkt bei Verschiebung des Kipphebels von einer Seite des Schwenkzapfens auf die andere
wandert und dadurch wechselweise einer der beiden Arme
(46 bzw. 48) des Kipphebels (32) zur Anlage am Umfang des
zweiten Reibungselements (22) bringbar ist, und daß am
Umfang des zweiten Reibungselements (22) wenigstens eine
Nase (24) ausgebildet ist, in welche der Rasthebel (46)
bei Drehung des zweiten Reibungselements (22) in Gurt-

Postscheckkonto: Karlsruhe 76979-754   Bankkonto: Deutsche Bank AG Villingen (BLZ 69470039) 146332

aufrollrichtung gegen ein radiales Abschwenken festgehalten einrastbar ist und welche an ihrer einen Flanke einen Absatz (26) aufweist, der zur Verschiebung des Kipphebels (32) mit dessen zweitem Arm (48) bei Drehung des zweiten Reibungselements (22) in Gurtauszugsrichtung in Eingriff bringbar ist.

2. Vorrichtung nach Anspruch 1, dadurch gekennzeichnet, daß das zweite Reibungselement (22) eine frei drehbar am Gehäuse gelagerte Trommel ist.

3. Vorrichtung nach Anspruch 2, dadurch gekennzeichnet, daß die Trommel (22) ein konzentrisch, frei drehbar auf der Gurtwelle (16) gelagerter Hohlzylinder ist, dessen innere Mantelfläche das eine Reibungselement bildet.

4. Vorrichtung nach Anspruch 3, dadurch gekennzeichnet, daß das mit der Gurtwelle (16) verbundene Reibungselement eine an der Gurtwelle befestigte, an der inneren Mantelfläche der Trommel (22) anliegende Rutschfeder (20) ist.

5. Vorrichtung nach Anspruch 3 oder 4, dadurch gekennzeichnet, daß die Trommel (22) als einseitig geschlossene hohlzylindrische Kunststoffkappe ausgebildet ist, deren geschlossene Bodenfläche als Nabe auf der Gurtwelle (16) sitzt und die Reibungselemente abdeckt.

0005521

- 3 -

6. Vorrichtung nach Anspruch 1, dadurch gekennzeichnet, daß drei Nasen (24) in gleichem gegenseitigem Winkelabstand am Umfang des zweiten Reibungselementes (22) vorgesehen sind.

7. Vorrichtung nach Anspruch 1, dadurch gekennzeichnet, daß die Feder (40) eine Schenkelfeder ist, deren einer Schenkel (42) am Gehäuse (12) festgelegt ist und deren anderer Schenkel (44) an dem Kipphebel (32) anliegt.

8. Vorrichtung nach Anspruch 1, dadurch gekennzeichnet, daß der Kipphebel (32) aus Kunststoff besteht.

1/1

0005521

FIG.1

FIG.2

Europäisches
Patentamt

**EUROPÄISCHER RECHERCHENBERICHT**

| Kategorie | Kennzeichnung des Dokuments mit Angabe, soweit erforderlich, der maßgeblichen Teile | betrifft Anspruch | KLASSIFIKATION DER ANMELDUNG (Int.Cl.³) |
|---|---|---|---|
| | FR - A - 2 322 814 (DEVALOIS)<br>* Fig. 3 bis 6 *<br>--- | 1 | A 62 B . 35/02 |
| | US - A - 3 858 826 (SPRECHER)<br>* Fig. 3 bis 6 *<br>--- | 1 | |
| | US - A - 3 341 150 (BOARD et al.)<br>* Fig. 4 bis 7 *<br>--- | 1 | **RECHERCHIERTE SACHGEBIETE (Int. Cl.³)** |
| D,A | DE - A - 2 256 493 (LINDBLAD)<br>* Ansprüche 1 und 2 *<br>--- | 1 | A 62 B 35/02<br>B 60 R 21/10<br>B 65 H 75/48 |
| A | DE - A - 2 643 731 (WOLFF)<br>* Anspruch 1 *<br>-- | | |
| A | DE - A - 2 635 771 (J.N. EBERLE & CIE.)<br>* Anspruch 1 *<br>---- | | |

**EINSCHLÄGIGE DOKUMENTE**

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X   Der vorliegende Recherchenbericht wurde für alle Patentansprüche erstellt.

| Recherchenort | Abschlußdatum der Recherche | Prüfer |
|---|---|---|
| Berlin | 24-07-1979 | KANAL |

EPA form 1503.1   06.78